# EUROPEAN PATENT APPLICATION

(11) **EP 3 978 293 A1**
(43) Date of publication of application: **06.04.2022**
(21) Application number: 21194952.4
(22) Date of filing: 06.09.2021
(51) Int. Cl.: B60K 35/00, B60K 37/06, B60R 13/02

(54) **AUTOMOTIVE ORNAMENT AND MANUFACTURING METHOD THEREOF**

(30) Priority: 30.09.2020 TW 109134299
(71) Applicant: Hiroca Automotive Trim Corporation, Taoyuan City 326 (TW)
(72) Inventor: YU, Che-Ming, 326 Taoyuan City (TW); CHUANG, Wu Chuan, 300 Hsinchu City (TW); LEE, Shuming, 302 Zhubei City (TW)
(74) Representative: Becker, Eberhard

(57) **Abstract**

An automotive ornament (1, 2, 3, 4, 5, 6, 7, 8, 9, 91, 92, 10, 100, 200, 300, 400, 500, 600, 700, 800, 900, D), including a circuit board (170), a substrate (2b, 4b, 6b, 8b, 91b, 11, 110), a light-emitting element (14, 140), a surface decoration layer (3b, 9a, 92a, 13, 130, 230, 430, 630, S), and a pressure sensing element (12, 120), is provided. The substrate (2b, 4b, 6b, 8b, 91b, 11, 110) is disposed on the circuit board (170). The light-emitting element (14, 140) is disposed between the circuit board (170) and the substrate (2b, 4b, 6b, 8b, 91b, 11, 110), and the light-emitting element (14, 140) is electrically connected to the circuit board (170). The surface decoration layer (3b, 9a, 92a, 13, 130, 230, 430, 630, S) wraps the substrate (2b, 4b, 6b, 8b, 91b, 11, 110). The surface decoration layer (3b, 9a, 92a, 13, 130, 230, 430, 630, S) covers the pressure sensing element (12, 120). The pressure sensing element (12, 120) is electrically connected to the light-emitting element (14, 140) through the circuit board (170), and pressure sensing of the pressure sensing element (12, 120) causes the light-emitting element (14, 140) to emit light, vibrate, or feedback sound.

## Description

### BACKGROUND

### Technical Field

The invention relates to an ornament and a manufacturing method thereof, and particularly relates to an automotive ornament and a manufacturing method thereof.

### Description of Related Art

Automotive ornament is one of the commonly used automobile components, and the prior art often only focuses on improving a visual effect of the automotive ornament, while ignoring its functional design. Further, in order to meet the actual needs of users, practicality of automotive ornament has also been paid more attention. Therefore, how to design an automotive ornament having both improved visual effect and practicality is indeed a challenge.

### SUMMARY

The invention provides an automotive ornament and a manufacturing method thereof, which have both improved visual effect and practicality.

An automotive ornament of the invention includes a circuit board, a substrate, a light-emitting element, a surface decoration layer, and a pressure sensing element. The substrate is disposed on the circuit board. The light-emitting element is disposed between the circuit board and the substrate, and the light-emitting element is electrically connected to the circuit board. The surface decoration layer wraps the substrate. The surface decoration layer covers the pressure sensing element. The pressure sensing element is electrically connected to the light-emitting element through the circuit board, and pressure sensing of the pressure sensing element causes the light-emitting element to emit light, vibrate, or feedback sound.

In an embodiment of the invention, the automotive ornament further includes an adhesive layer. The adhesive layer is disposed between the surface decoration layer and the substrate.

In an embodiment of the invention, the light-emitting element is a micro light-emitting element in the circuit board.

In an embodiment of the invention, the pressure sensing element penetrates through the substrate.

In an embodiment of the invention, the automotive ornament further includes a texture layer. The texture layer includes a texture pattern. The surface decoration layer covers the texture pattern, and the texture layer has a stretching degree less than that of the surface decoration layer.

In an embodiment of the invention, the texture layer is disposed between the substrate and the surface decoration layer or the texture layer is disposed between the substrate and the circuit board.

In an embodiment of the invention, the surface decoration layer includes light-transmitting leather, semi-light-transmitting leather, opaque leather, gel film, imitation wood veneer, real wood veneer, leather with color gradation or gel film with color gradation.

In an embodiment of the invention, the automotive ornament further includes a light-blocking bracket surrounding a light-emitting area of the light-emitting element.

In an embodiment of the invention, the automotive ornament further includes a light-transmitting mark. A ray emitted by the light-emitting element exits the surface decoration layer through the light-transmitting mark to display the light-transmitting mark.

A manufacturing method of an automotive ornament of the invention includes at least following steps. A substrate is provided. The substrate has a first surface and a second surface opposite to the first surface. A pressure sensing element is disposed in the substrate. A surface decoration layer is stretched so that the surface decoration layer at least wraps the substrate. A circuit board is disposed on the second surface. The circuit board has a light-emitting element, the pressure sensing element is electrically connected to the light-emitting element through the circuit board, and the light-emitting element is made to emit light, vibrate, or feedback sound through pressure sensing of the pressure sensing element.

Based on the above description, due to the light-transmitting property of the surface decoration layer, the substrate of the automotive ornament of the invention may have an improved visual effect through wrapping of the surface decoration layer. In addition, as the surface decoration layer covers the pressure sensing element, the pressure sensing element is electrically connected to the light-emitting element through the circuit board, and the pressure sensing of the pressure sensing element causes the light-emitting element to emit light, the automotive ornament of the invention has both practicality and improved visual effect.

To make the aforementioned more comprehensible, several embodiments accompanied with drawings are described in detail as follows.

### BRIEF DESCRIPTION OF THE DRAWINGS

FIG. 1A is a flowchart illustrating steps of a manufacturing method of an automotive ornament according to an embodiment of the invention.
FIG. 1B is a schematic partial cross-sectional view of an automotive ornament according to an embodiment of the invention.
FIG. 2, FIG. 3A, FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, FIG. 18, FIG. 19, FIG. 20 and FIG. 21 are schematic partial cross-sectional diagrams of automotive ornaments according to some embodiments of the invention.
FIG. 3B is a schematic three-dimensional disassembly diagram of the automotive ornament of FIG. 3A.
FIG. 22A to FIG. 22D are schematic partial cross-sectional views of a part of a manufacturing method of an automotive ornament according to some embodiments of the invention.
FIG. 23A to FIG. 23D are schematic partial cross-sectional views of a part of a manufacturing method of an automotive ornament according to some other embodiments of the invention.

### DESCRIPTION OF THE EMBODIMENTS

The directional terms used herein (for example, up, down, right, left, front, back, top, bottom) are only used as a reference to the drawings and are not intended to imply absolute orientations.

Unless specifically stated otherwise, any method described herein is in no way intended to be interpreted as requiring its steps to be performed in a specific order.

The invention is explained more fully with reference to the drawings of the embodiments. However, the invention may also be embodied in various forms and should not be limited to the embodiments described herein. Thicknesses, sizes or magnitudes of layers or regions in the drawings may be exaggerated for clarity's sake. The same or similar reference numbers indicate the same or similar elements, which will not be repeated one by one.

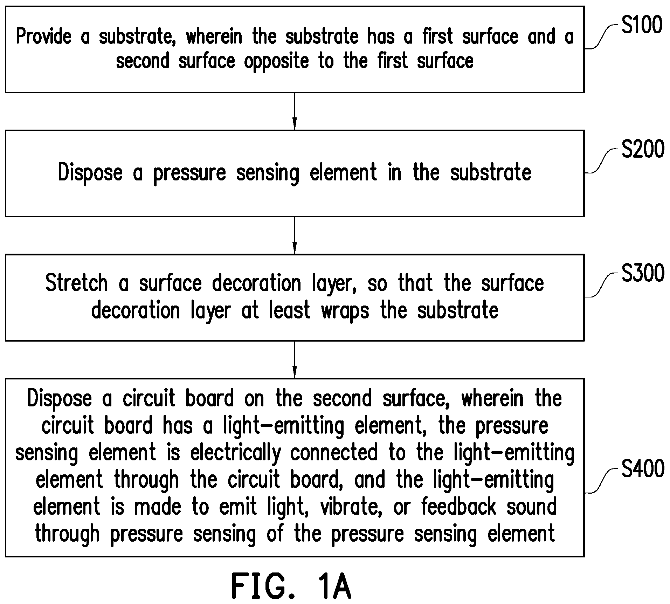

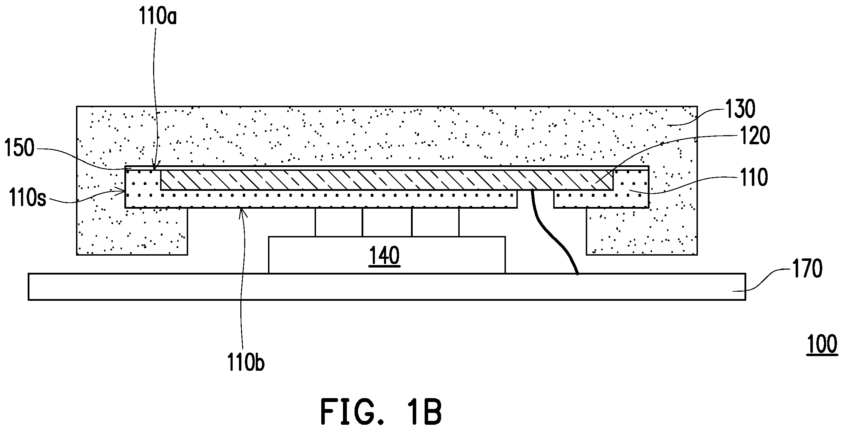

FIG. 1A is a flowchart illustrating steps of a manufacturing method of an automotive ornament according to an embodiment of the invention. FIG. 1B is a schematic partial cross-sectional view of an automotive ornament according to an embodiment of the invention. Referring to FIG. 1A and FIG. 1B, an automotive ornament 100 of the embodiment includes a substrate 110, a pressure sensing element 120, a surface decoration layer 130, a light-emitting element 140, and a circuit board 170, and is manufactured by at least the following steps. The substrate 110 is provided, where the substrate 110 has a first surface 110a and a second surface 110b opposite to each other (step S100). The pressure sensing element 120 is disposed in the substrate 110 (step S200). The surface decoration layer 130 is stretched so that the surface decoration layer 130 at least wraps the substrate 110 (step S300). The circuit board 170 is disposed on the second surface 110b, where the light-emitting element 140 is disposed on the circuit board 170, the pressure sensing element 120 is electrically connected to the light-emitting element 140 through the circuit board 170, and the light-emitting element 140 is made to emit light, vibrate, or feedback sound through pressure sensing of the pressure sensing element 120 (step S400). The pressure sensing element 120 may have a press delay activation function, but the invention is not limited thereto.

In some embodiments, the substrate 110 is provided with a fixing groove to place the pressure sensing element 120, and the pressure sensing element 120 may be aligned with a top surface of the substrate 110, but the invention is not limited thereto.

Further, the substrate 110 of the embodiment is disposed on the circuit board 170, the light-emitting element 140 is disposed between the circuit board 170 and the substrate 110, the light-emitting element 140 is electrically connected to the circuit board 170, and the surface decoration layer 130 is disposed in the substrate 110. In this way, due to the light-transmitting property of the surface decoration layer 130, the substrate 110 of the automotive ornament 100 of the embodiment may have an improved visual effect due to covering of the surface decoration layer 130. In addition, as the surface decoration layer 130 covers the pressure sensing element 120, the pressure sensing element 120 is electrically connected to the light-emitting element 140 through the circuit board 170, and the pressure sensing of the pressure sensing element 120 causes the light emitting element 140 to emit light, vibrate, or feedback sound, the automotive ornament 100 of the embodiment have both practicality and improved visual effect.

In some embodiments, the substrate 110 is, for example, polycarbonate (PC), ABS resin, or poly(methyl methacrylate) (PMMA). However, the invention is not limited thereto, and the substrate 110 may be any other suitable material, as long as the substrate 110 may carry the components or film layers subsequently formed thereon and withstand the subsequent manufacturing processes. Moreover, the surface decoration layer 130 may also be any suitable light-transmitting material (with a light transmittance at least greater than 0%) or an opaque material, which is not limited by the invention, and some examples of detailed materials will be described in subsequent embodiments.

In some embodiments, the pressure sensing element 120, for example, energized though two materials with different conductivities by a pressure generated through pressing, so as to make the light-emitting element 140 to emit light, but the invention is not limited thereto, and the pressure sensing element 120 may be energized by other suitable means.

In some embodiments, the circuit board 170 may be connected to a power source (not shown) to actuate the pressure sensing element 120 and the light-emitting element 140, so that the automotive ornament 100 may have the ability to adjust a light source brightness and a light emission timing by itself. The circuit board 170 may be a rigid board or a flexible board, where the rigid board may be a PCB board or ITO, and the flexible board may be an FPC board or PEDOT.

In some embodiments, the light-emitting element 140 is, for example, a light-emitting diode (LED) or a micro LED, where the micro LED may include a positive light source LED, a MINI LED, a light-emitting bar, a side light source, and a backlight module, but the invention is not limited thereto. In addition, in an embodiment that is not shown, the light-emitting element 140 may not be soldered on the circuit board 170.

It should be noted that the invention does not limit the configuration method and configuration location of the light-emitting element 140, as long as the pressure sensing of the pressure sensing element 120 may cause the light-emitting element 140 to emit light, it falls within a protection scope of the invention.

In the embodiment, the surface decoration layer 130 wraps a sidewall 110s and the second surface 110b of the substrate 110 to improve wrapping property of the automotive ornament 100, but the invention is not limited thereto, and in other embodiments that are not shown, a bottom surface of the surface decoration layer 130 may be substantially coplanar with the second surface 110b of the substrate 110.

In some embodiments, the automotive ornament 100 further includes a first adhesive layer 150 between the substrate 110 and the pressure sensing element 120 to fix the substrate 110 and the surface decoration layer 130 by the first adhesive layer 150, but the invention is not limited thereto. Here, the first adhesive layer 150 is, for example, transparent glue or other suitable adhesive materials.

It should be noticed that reference numbers of the components and a part of contents of the aforementioned embodiment are also used in the following embodiment, where the same reference numbers denote the same or like components, and descriptions of the same technical contents are omitted. The aforementioned embodiment may be referred for descriptions of the omitted parts, and detailed descriptions thereof are not repeated in the following embodiment.

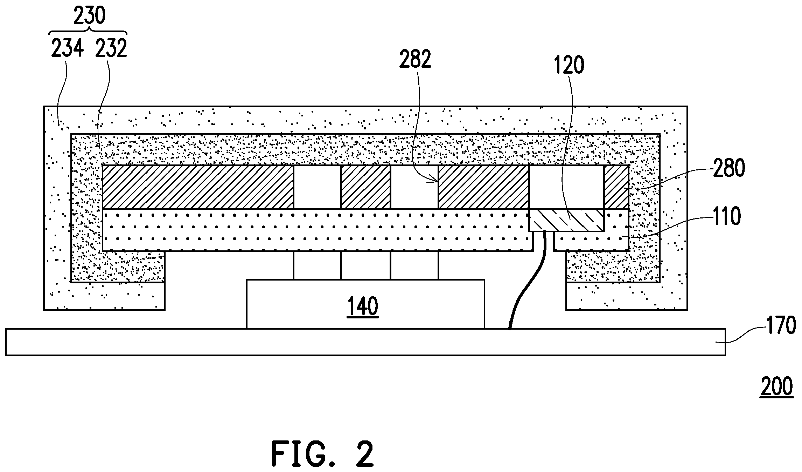

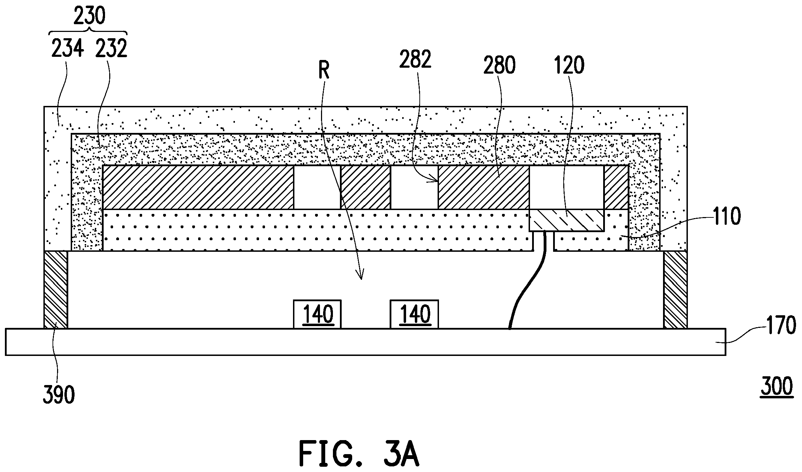

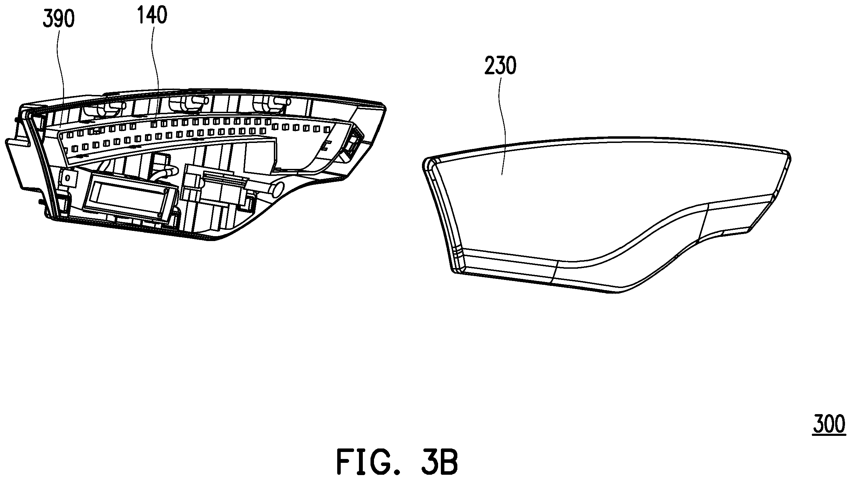

FIG. 2, FIG. 3A, FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, FIG. 18, FIG. 19, and FIG. 20 are schematic partial cross-sectional diagrams of automotive ornaments according to some embodiments of the invention. FIG. 3B is a schematic three-dimensional disassembly diagram of the automotive ornament of FIG. 3A.

Referring to FIG. 2, compared with the automotive ornament 100 of the embodiment of FIG. 1, an automotive ornament 200 of the embodiment further includes a texture layer 280 on the substrate 110, and a surface decoration layer 230 may be light-transmitting leather composed of a light-transmitting substrate 232 and a top surface decoration layer 234, where the light-transmitting leather may be at least semi-light-transmitting. Further, the texture layer 280 may be formed on the first surface 110a of the substrate 110, i.e., the texture layer 280 is disposed between the substrate 110 and the surface decoration layer 230. In the embodiment, the texture layer 280 is, for example, black paint or ink with a shielding function formed by a spraying process, but the invention is not limited thereto. In other embodiments, the texture layer 280 may be formed by using other materials and processes.

In some embodiments, the light-transmitting substrate 232 is, for example, semi-permeable sponge, 3D MACH or modified polyethylene terephthalate (PET), and the top surface decoration layer 234 is, for example, light-transmitting leather, semi-light-transmitting leather, polyurethane (PU) or TPE.

Further, the texture layer 280 includes a texture pattern 282. For example, the texture pattern may be formed in the texture layer 280 by laser engraving or multi-layer coating printing. In addition, vacuum sputtering may be performed after laser engraving to achieve a high-gloss metallic feel, but the invention is not limited thereto, as long as the texture layer 280 has the texture pattern 282, it belongs to the protection scope of the invention. The texture pattern 282 is, for example, a plurality of openings on the texture layer 280 exposing the underlying substrate 110, as shown in FIG. 2. In addition, the surface decoration layer 230 may cover the texture pattern 282, and the texture layer 280 has a stretching degree less than that of the surface decoration layer 230. Therefore, the texture pattern 282 in the texture layer 280 of the embodiment will not be affected by a stretching force to produce shift or deformation, so that positioning and deformation of the texture pattern 282 may be effectively ameliorated. In addition, since the texture pattern 282 is covered by the surface decoration layer 230, a product surface will not have a decorative effect when the light source is not provided to the automotive ornament 200, and when the light source is provided to the automotive ornament 200, based on the light-transmitting property of the surface decoration layer 230, the texture pattern 282 may have a decorative effect, which enhances diversity of the automotive ornament 200.

In some embodiments, the texture layer 280 may be substantially not stretched during a wrapping process of the surface decoration layer 230. In other words, a stretching degree of the texture layer 280 may be close to 0% during the wrapping process, but the invention is not limited thereto.

In the embodiment, the pressure sensing element 120 is disposed in the texture layer 280 and adjacent to the texture pattern 282, so that when the user applies pressure on the texture pattern 282, the pressure sensing element 120 may be pressed, and the light-emitting element 140 emits light. In this way, practicality of automotive ornament may be further enhanced.

In some embodiments, laser engraving may be performed to a surface of the pressure sensing element 120, so that the pressure sensing element 120 and the texture pattern 282 have a uniform thickness to improve pressure sensitivity of the pressure sensing element 120, but the invention is not limited thereto.

Referring to FIG. 3A and FIG. 3B, compared with the automotive ornament 200 of the embodiment of FIG. 2, an automotive ornament 300 of the embodiment further includes a light-blocking bracket 390 surrounding a light-emitting area R of the light-emitting element 140, so that light loss of the light-emitting element 140 may be reduced to improve a light-gathering effect. In addition, in the embodiment, the surface decoration layer 230 may only wrap the sidewall of the substrate 110, and the light-blocking bracket 390 directly contacts the substrate 110, but the invention is not limited thereto.

On the other hand, in the embodiment, the light-emitting element 140 may be a micro light-emitting element in the circuit board 170 to improve configuration flexibility, but the invention is not limited thereto. The micro light-emitting element is, for example, a mini light-emitting diode (mini LED).

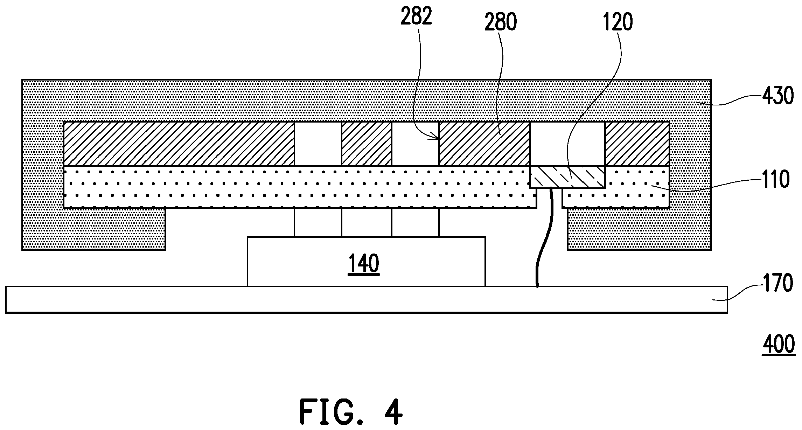

Referring to FIG. 4, compared with the automotive ornament 200 of the embodiment of FIG. 2, a surface decoration layer 430 of an automotive ornament 400 of the embodiment may be a gel film. For example, the above gel film (TOM film) may be formed by a three-dimensional overlay method, but the invention is not limited thereto.

In some embodiments, the gel film only needs to have a light-transmitting property, and a light transmittance of the gel film may be adjusted according to actual design requirements.

In some embodiments, the surface decoration layer 430 may be formed by vacuum thermoforming, but the invention is not limited thereto.

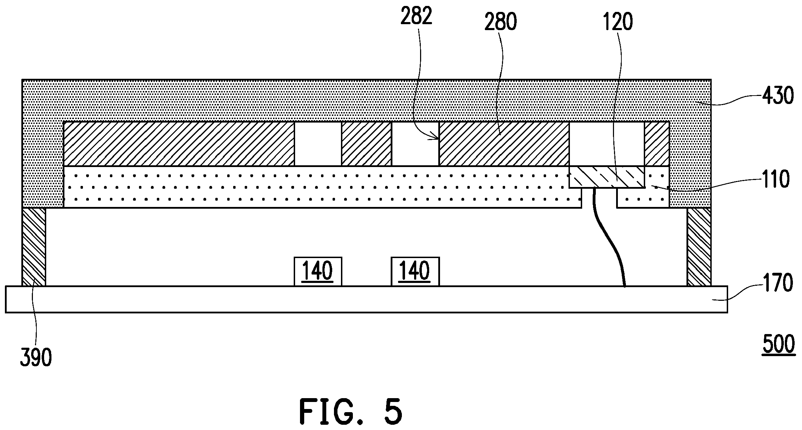

Referring to FIG. 5, compared with the automotive ornament 400 of the embodiment of FIG. 4, an automotive ornament 500 of the embodiment further includes the light-blocking bracket 390, where technical content of the light-blocking bracket 390 is similar to that described in the above embodiment, and detail thereof is not repeated. In addition, in the embodiment, the surface decoration layer 430 may only wrap the sidewall of the substrate 110, and the light blocking bracket 390 directly contacts the substrate 110, but the invention is not limited thereto.

On the other hand, in the embodiment, the light-emitting element 140 may be a micro light-emitting element in the circuit board 170 to improve configuration flexibility, but the invention is not limited thereto. The micro light-emitting element is, for example, a mini LED.

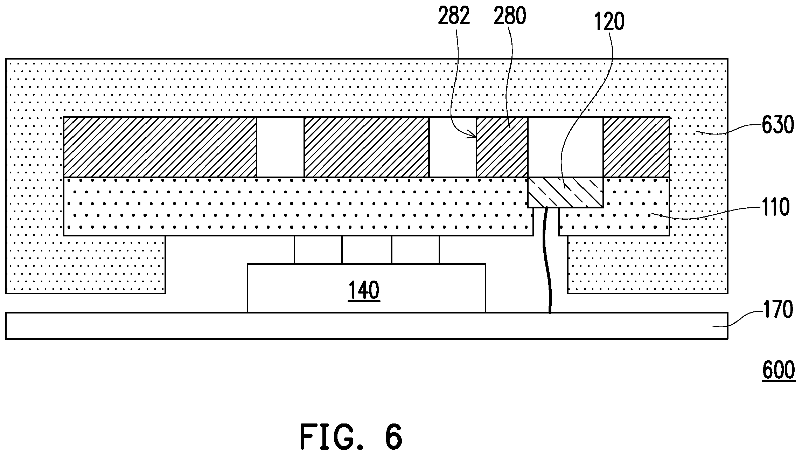

Referring to FIG. 6, compared with the automotive ornament 200 of the embodiment of FIG. 2, a surface decoration layer 630 of an automotive ornament 600 of the embodiment may be real wood veneer, where the real wood veneer may have a light-transmitting property, and a light transmittance thereof may be determined by a material of the selected real wood veneer. The real wood veneer may be any real wood decoration material that is well known by those skilled in the art.

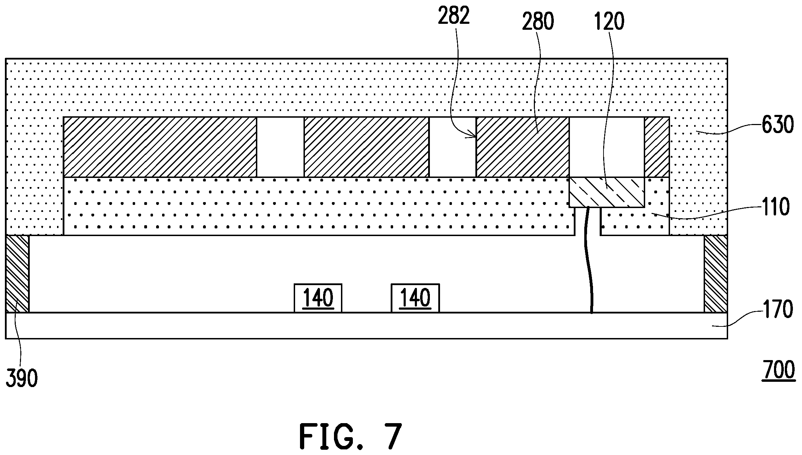

Referring to FIG. 7, compared with the automotive ornament 600 of the embodiment of FIG. 6, an automotive ornament 700 of the embodiment further includes the light-blocking bracket 390, where technical content of the light-blocking bracket 390 is similar to that described in the above embodiment, and detail thereof is not repeated. In addition, in the embodiment, a surface decoration layer 630 may only wrap the sidewall of the substrate 110, and the light blocking bracket 390 directly contacts the substrate 110, but the invention is not limited thereto.

On the other hand, in the embodiment, the light-emitting element 140 may be a micro light-emitting element in the circuit board 170 to improve configuration flexibility, but the invention is not limited thereto. The micro light-emitting element is, for example, a mini LED.

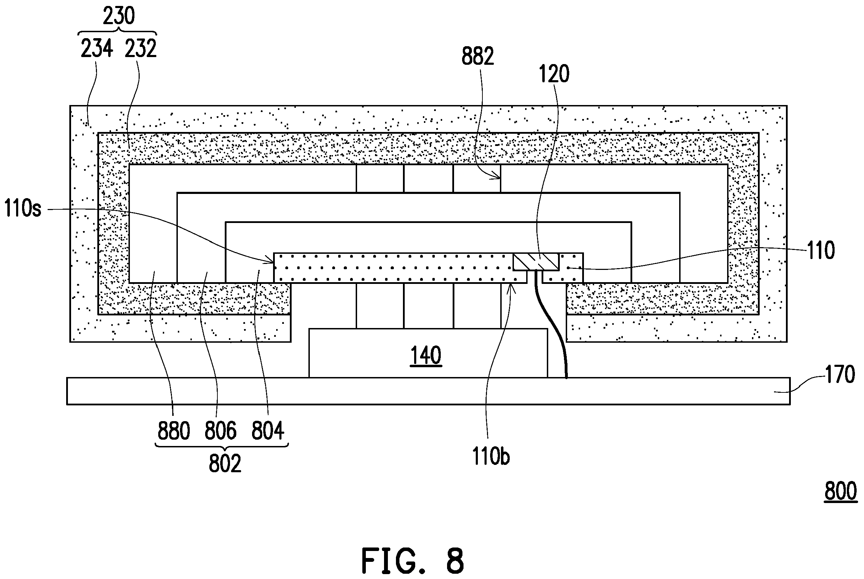

Referring to FIG. 8, compared with the automotive ornament 100 of the embodiment of FIG. 2, an automotive ornament 800 of the embodiment further includes a thickened layer 802 located between the base 110 and the surface decoration layer 230, where the thickened layer 802 extends from the first surface 110a of the base 110 to wrap the sidewall 110s of the base 110, and the thickened layer 802 may be composed of a light-transmitting substrate 804, leather 806, and a texture layer 880.

In some embodiments, the leather 806 and the texture layer 880 may be formed on the light-transmitting substrate 804 by a printing process. In addition, the texture layer 880 is, for example, ink, and technical content of the light-transmitting substrate 804 and the leather 806 are similar to that of the light-transmitting substrate 232 and the top surface decoration layer 234, and technical content of the texture layer 880 is similar to that of the texture layer 280, and details thereof are not repeated.

In some embodiments, the thickened layer 802 may further wrap the second surface 110b (not shown) of the substrate 110 to improve wrapping property of the product, but the present invention is not limited thereto.

In the embodiment, since the surface decoration layer 130 is very thin, the use of the thickening layer 802 may increase an overall thickness of the automotive ornament 800 to achieve a better decoration effect. In addition, since a texture pattern 882 may produce defects (lattice like) in the opening during a manufacturing process, the use of the light-transmitting substrate 804 in the thickened layer 802 may reduce the probability of seeing the opening defects of the texture pattern 882, but the invention is not limited thereto. In addition, the thickened layer 802 may also have a function of improving elasticity of the automotive ornament 800, but the invention is not limited thereto.

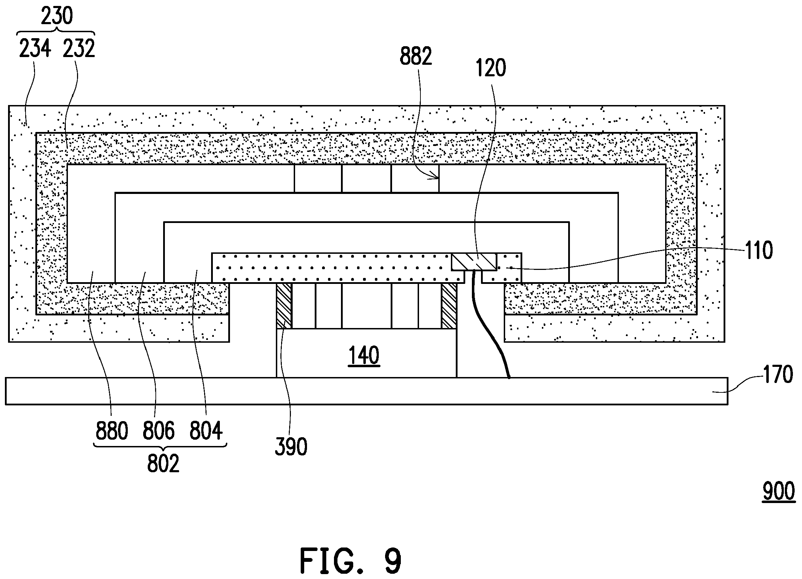

Referring to FIG. 9, compared with the automotive ornament 800 of the embodiment of FIG. 8, an automotive ornament 900 of the embodiment further includes the light-blocking bracket 390, where technical content of the light-blocking bracket 390 is similar to that described in the above embodiment, and detail thereof is not repeated.

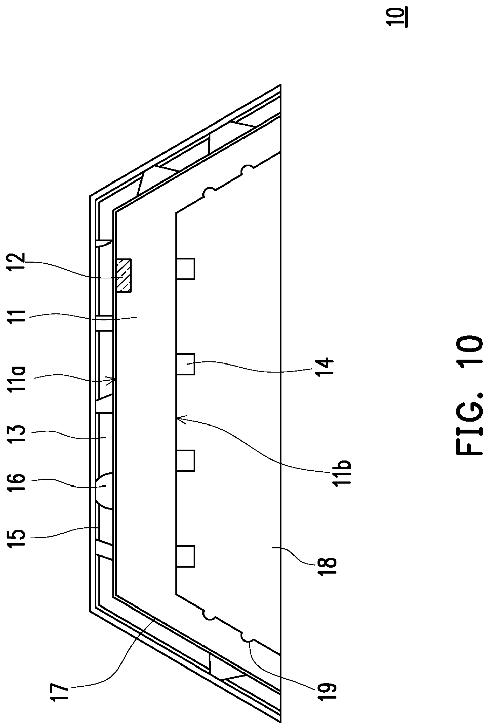

Referring to FIG. 10, compared with the automotive ornament 100 of the embodiment of FIG. 1, an automotive ornament 10 of the embodiment includes a substrate 11, a pressure sensing element 12, a surface decoration layer 13 (which may be a light-transmitting surface decoration layer), and a light-emitting element 14. Furthermore, the substrate 11 has a first surface 11a and a second surface 11b opposite to the first surface 11a, the pressure sensing element 12 is disposed on the first surface 11a, the surface decoration layer 13 at least wraps the pressure sensing element 12 and the substrate 11, and the light-emitting element 14 is disposed on the second surface 11b. Accordingly, due to the light-transmitting property of the surface decoration layer 13, the pressure sensing element 12 and the substrate 11 of the automotive ornament 10 of the embodiment wrapped by the surface decoration layer 13 may have enhanced visual effect. In addition, as the pressure sensing of the pressure sensing element 12 disposed between the substrate 11 and the surface decoration layer 13 may cause the light-emitting element 14 to emit light, the automotive ornament 10 of the embodiment may have both enhanced visual effect and practicality. The surface decoration layer 13 roughly presents a thin-sheet shape, and the surface decoration layer 13 is attached to the substrate 11, but the invention is not limited thereto.

In addition, the surface decoration layer 13 has a decoration layer 15 and a light-transmitting mark 16 penetrating through the decoration layer 15. In some embodiments, a laser engraving device is used to engrave the required light-transmitting mark 16 on the surface decoration layer 13. According to actual needs, structures of the light-transmitting mark 16 are diversified, for example, the light-transmitting mark 16 is an animal pattern, a plant pattern, a straight line, a curved line, etc., and a ray emitted by the light-emitting element 14 exits the surface decoration layer 13 through the light-transmitting mark 16 to display the light-transmitting mark 16, but the invention is not limited thereto.

In some embodiments, the automotive ornament 10 is installed on a frame of the vehicle via the substrate 11. During the daytime, the decoration layer 15 of the surface decoration layer 13 is used to decorate the vehicle. At night time or when ambient light is dim, the ray emitted by the light-emitting element 14 exits the surface decoration layer 13 through the light-transmitting mark 16 to display the light-transmitting mark 16. By using the light-transmitting mark 16 to decorate the vehicle, a structural design of the automotive ornament is greatly simplified, which improves the manufacturing efficiency, reduces the manufacturing cost, and enhances diversity of automotive ornament.

In some embodiments, the light-transmitting mark 16 may be a hidden light-emitting structure at a pattern edge or a substrate edge, but the invention is not limited thereto.

In some embodiments, the automotive ornament 10 also includes a light-transmitting glue layer 17 (adhesive layer), the light-transmitting glue layer 17 is located between the surface decoration layer 13 and the substrate 11, and the surface decoration layer 13 is adhered and fixed on the substrate 11 through the light-transmitting glue layer 17. Light-transmitting glue is automatically coated on the surface decoration layer 13 by a glue coating device, and then the surface decoration layer 13 is adhered and fixed on the substrate 11 by the light-transmitting glue, but the invention is not limited thereto.

In some embodiments, the decoration layer 15 is a paint layer or an ink layer. According to actual needs, a paint coating may be automatically coated on the surface decoration layer 13 via a coating device; or the ink layer may be automatically printed on the surface decoration layer via a printing device, which is not limited by the invention.

In some embodiments, the substrate 11 has a blind groove, and the blind groove is recessed from the side of the substrate 11 away from the surface decoration layer 13, and the light-emitting element 14 is accommodated in the blind groove. On the one hand, a side wall of the blind groove is used to block and protect the light-emitting element 14 to prevent the light-emitting element 14 from moving relative to the substrate 11 to avoid improper use. On the other hand, after the substrate 11 is installed on the frame of the vehicle, the blind groove prevents the substrate 11 and the frame of the vehicle from pinching the light-emitting element 14, but the invention is not limited thereto.

In some embodiments, the automotive ornament 10 is further provided with a conductive substrate 18 (circuit board). According to actual needs, the conductive substrate 18 may be a printed circuit board or a flexible circuit board. The substrate 11 has a clamping hole recessed from the side wall of the blind groove, the conductive substrate 18 is contained in the blind groove, and the conductive substrate 18 is provided with a clamping protrusion 19 extending into the clamping hole. The light-emitting element 14 is installed on the conductive substrate 18, and the light-emitting element 14 is electrically connected to an external power supply via the conductive substrate 18, but the invention is not limited thereto.

In some embodiments, the light-emitting element 14 is installed on the conductive substrate 18 first, and then the conductive substrate 18 and the light-emitting element 14 are altogether installed on the substrate 11 to reduce probability of collision during installation of the light-emitting element 14 and improve an installation yield of the light-emitting element 14. After the conductive substrate 18 is installed in the blind groove, the clamping protrusion 19 extends into the clamping hole, and an inner hole wall of the clamping hole is used to block and abut the conductive substrate 18 to prevent the conductive substrate 18 from falling off the substrate 11 to cause improper use.

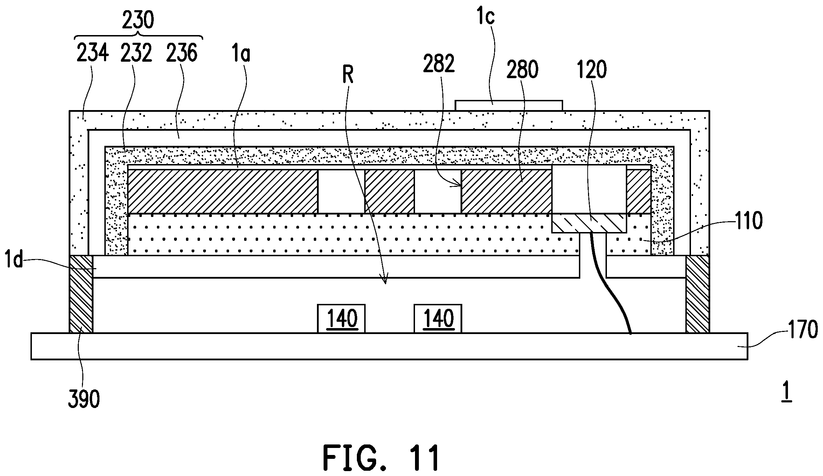

Referring to FIG. 11, compared with the automotive ornament 300 of the embodiment of FIG. 3A, an automotive ornament 1 of the embodiment further includes an adhesive layer 1a disposed between the surface decoration layer 230 and the substrate 110, and a semi-light-transmitting ink layer 236 may be optionally disposed between the light-transmitting substrate 232 and the top surface decoration layer 234. In addition, in the embodiment, the automotive ornament 1 may also include a transfer printing/laser engraving pressing mark pattern 1c provided on the surface decoration layer 230, but the invention is not limited thereto.

In the embodiment, the substrate 110 and the circuit board 170 may further include a semi-light-transmitting diffuser Id there between, where the semi-light-transmitting diffuser Id implements refraction through concavity and convexity, and may achieve a color gradation effect through printing processing, but the invention is not limited thereto.

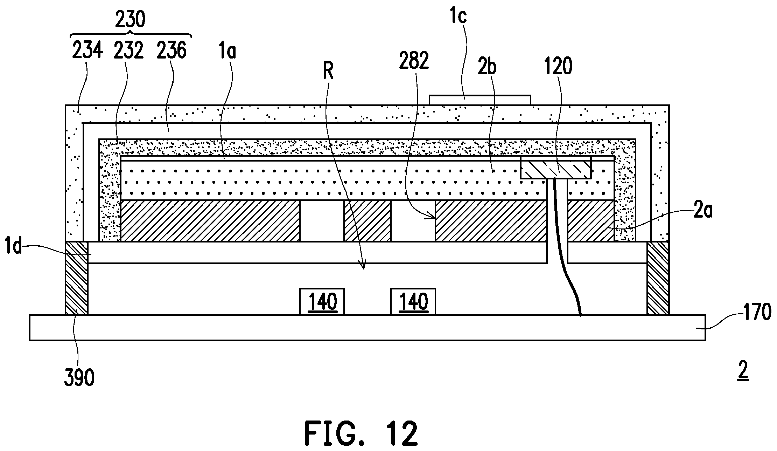

Referring to FIG. 12, compared with the automotive ornament 1 of the embodiment of FIG. 11, a texture layer 2a of an automotive ornament 2 is disposed between a substrate 2b and the circuit board 170.

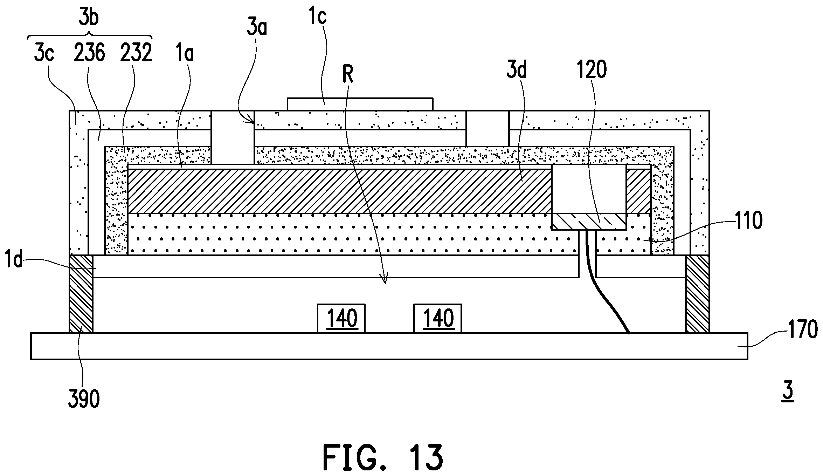

Referring to FIG. 13, compared with the automotive ornament 1 of the embodiment of FIG. 11, an automotive ornament 3 of the embodiment does not include a texture layer, and a texture pattern 3a is arranged in a surface decoration layer 3b. In addition, a top surface decoration layer 3c in the surface decoration layer 3b of the embodiment is opaque leather, but the invention is not limited thereto. In the embodiment, a pigmented coating layer 3d may be provided between the adhesive layer 1a and the substrate 110, but the invention is not limited thereto.

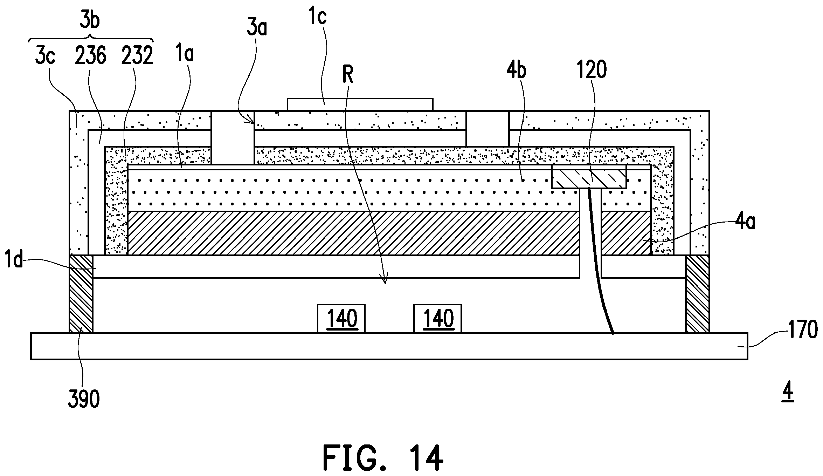

Referring to FIG. 14, compared with the automotive ornament 3 of the embodiment of FIG. 13, a pigmented coating layer 4a of an automotive ornament 4 of the embodiment is disposed between a substrate 4b and the circuit board 170, but the invention is not limited thereto.

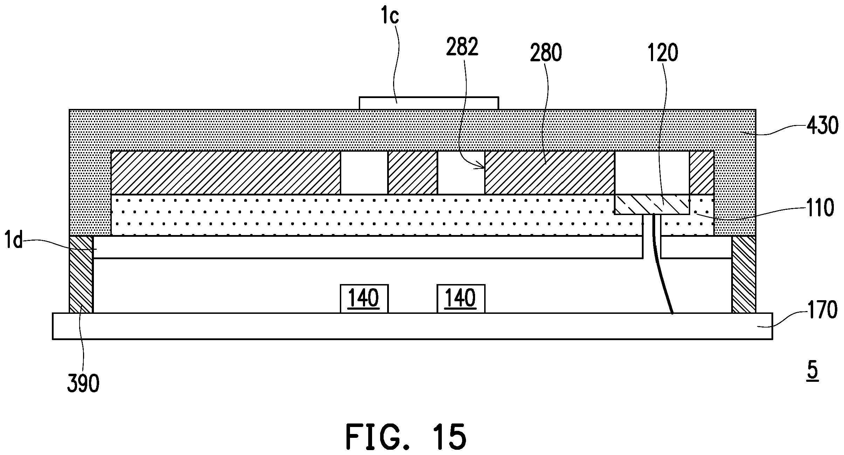

Referring to FIG. 15, compared with the automotive ornament 500 of the embodiment of FIG. 5, the texture layer 280 of an automotive ornament 5 of the embodiment may be ink or a full-page black gel film. In addition, in the embodiment, the automotive ornament 1 may also include a transfer printing/laser engraving pressing mark pattern 1c provided on the surface decoration layer 230, but the invention is not limited thereto.

In the embodiment, the substrate 110 and the circuit board 170 may further include a semi-light-transmitting diffuser Id there between, where the semi-light-transmitting diffuser Id implements refraction through concavity and convexity, and may achieve a gradation effect through printing processing, but the invention is not limited thereto.

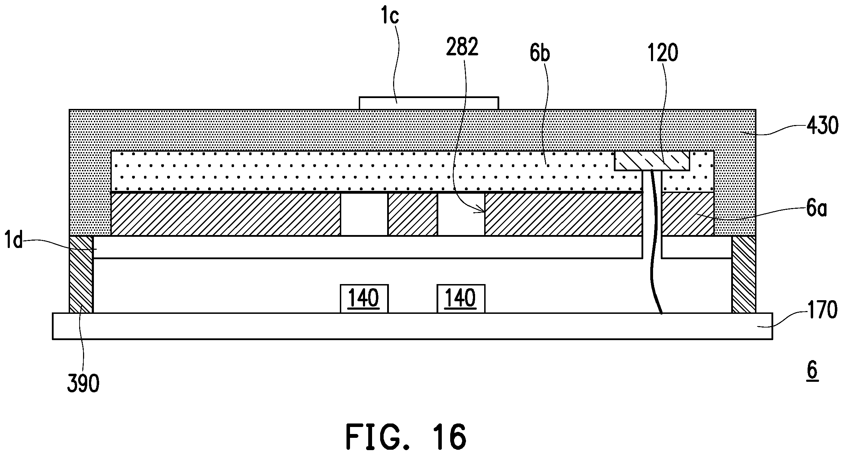

Referring to FIG. 16, compared with the automotive ornament 5 of the embodiment of FIG. 15, a texture layer 6a of an automotive ornament 6 of the embodiment is disposed between a substrate 6b and the circuit board 170, but the invention is not limited thereto.

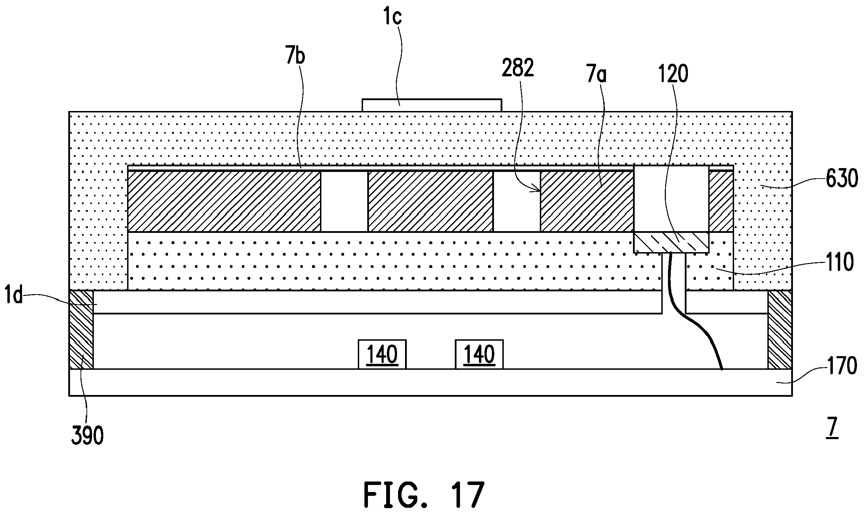

Referring to FIG. 17, compared with the automotive ornament 700 of the embodiment of FIG. 7, an automotive ornament 7 of the embodiment further includes an adhesive layer 7b disposed between a surface decoration layer 630 and the substrate 110, but the invention is not limited thereto.

In the embodiment, the substrate 110 and the circuit board 170 may further include a semi-light-transmitting diffuser Id there between, where the semi-light-transmitting diffuser Id implements refraction through concavity and convexity, and may achieve a gradation effect through printing processing, but the invention is not limited thereto.

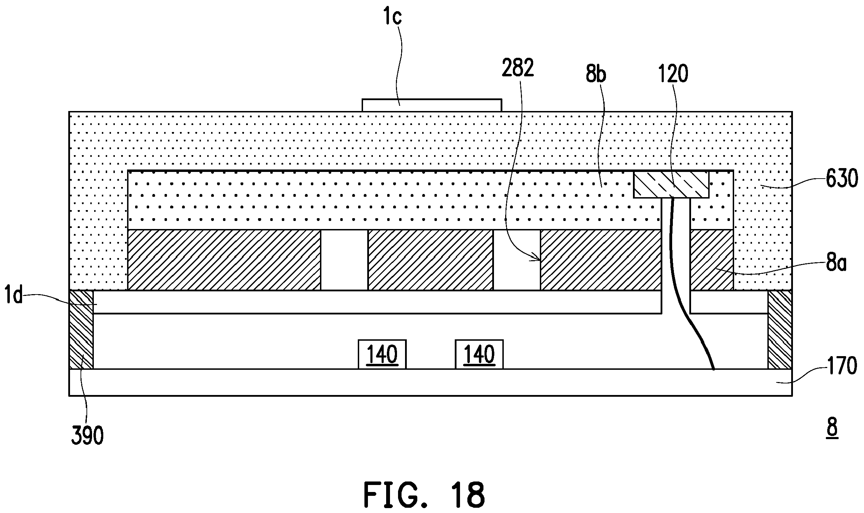

Referring to FIG. 18, compared with the automotive ornament 7 of the embodiment of FIG. 17, a texture layer 8a of an automotive ornament 8 of the embodiment is disposed between a substrate 8b and the circuit board 170, and an adhesive layer is not included, but the invention is not limited thereto.

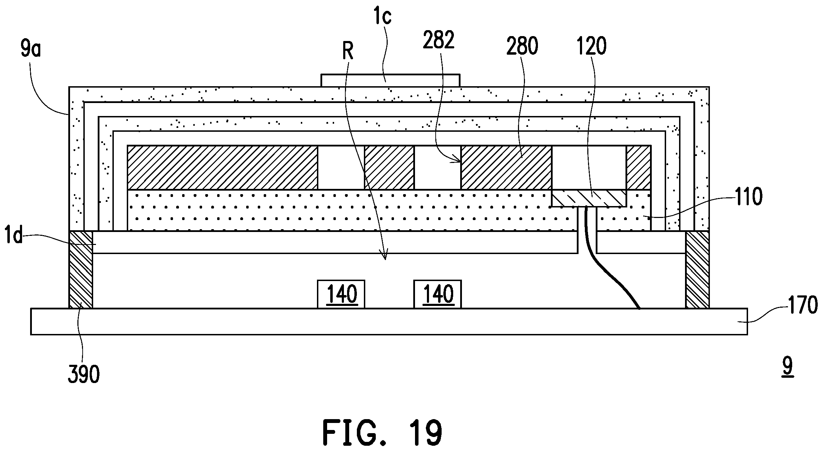

Referring to FIG. 19, compared with the automotive ornament 11 of the embodiment of FIG. 11, an automotive ornament 9 of the embodiment does not include an adhesive layer, and a surface decoration layer 9a is a four-layer structure, where the four-layer structure sequentially includes a high and low temperature hot melt gel film, a semi-light-transmitting/light-transmitting gel film (PVC/PU/ TPU), a hot melt gel layer and a semi-light-transmitting/light-transmitting gel film (PVC/PU/TPU) from inside to outside, but the invention is not limited thereto.

In some embodiments, the surface decoration layer 9a may not include the high and low temperature hot melt gel film, and when the surface decoration layer 9a includes the high and low temperature hot melt gel film, following heating methods are available. A first method may be to use infrared heating (permeable heating) to heat together with a front side (appearance)/a back side/front and back sides (double-sided) of the surface decoration layer 9a, while other parts of materials may be heated or not heated and may be sprayed or not sprayed. A second method may be ceramic heating (a ceramic plate heating requires high temperature since permeable heating is inapplicable), and such method requires front heating, while other parts of materials may be heated or not heated and may be sprayed or not sprayed. A third method may be to use a heating tube hot air to heat together with a front side (appearance)/a back side/front and back sides (double-sided) of the surface decoration layer 9a, while other parts of materials may be heated or not heated and may be sprayed or not sprayed.

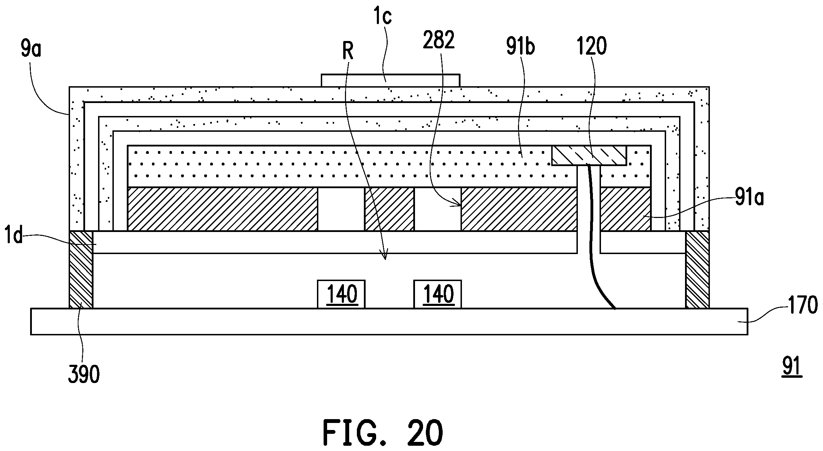

Referring to FIG. 20, compared with the automotive ornament 9 of the embodiment of FIG. 19, a texture layer 91a of an automotive ornament 91 of the embodiment is disposed between a substrate 91b and the circuit board 170. In addition, a pressure sensing element 91c of the automotive ornament 91 sequentially penetrates through the substrate 91b and the texture layer 91a, but the invention is not limited thereto.

In addition, in the above embodiments, the texture layer 2a, the texture layer 6a, the texture layer 7a, the texture layer 8a, the texture layer 91a, and the texture layer 880 may all be similar to the texture layer 280, i.e., the above texture layers may all be black paint or ink with a shielding function formed by a spraying process, and the texture patterns in the texture layers may all be formed in the pattern layer by laser engraving or multi-layer coating printing (no laser engraving). In addition, after laser engraving, vacuum sputtering may be performed to achieve a high-gloss metallic feel. On the other hand, the above-mentioned texture layer may be semi-light-transmitting, opaque, transparent, or a multi-layer stacked structure, and the texture layer is not limited to single-layer coating or printing, and may optionally include multiple layers.

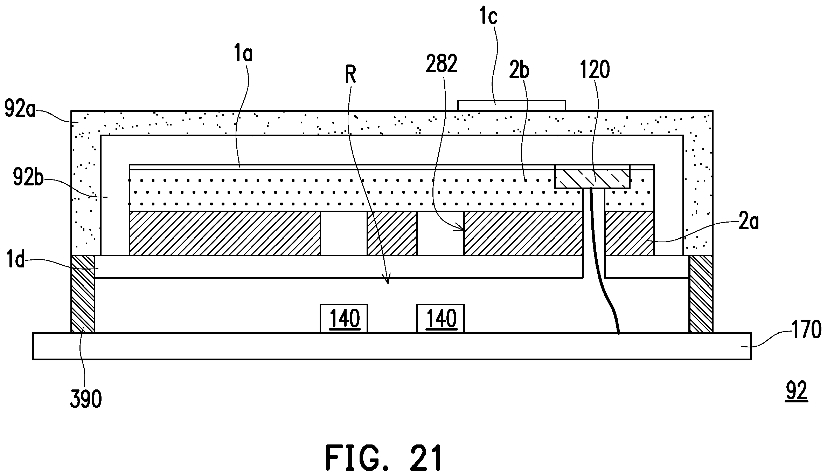

Referring to FIG. 21, compared with the automotive ornament 2 of the embodiment of FIG. 12, a surface decoration layer 92a of an automotive ornament 92 of the embodiment is light-transmitting leather of a single-layer structure, and the surface decoration layer 92a and the adhesive layer 1a further include a diffuser 92b there between, where the diffuser 92b implements refraction through concavity and convexity, but the invention is not limited thereto.

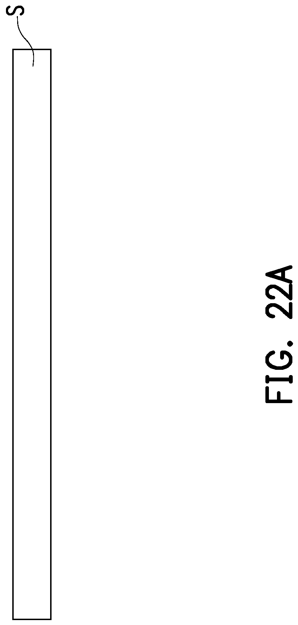

FIG. 22A to FIG. 22D are schematic partial cross-sectional views of a part of a manufacturing method of an automotive ornament according to some embodiments of the invention.

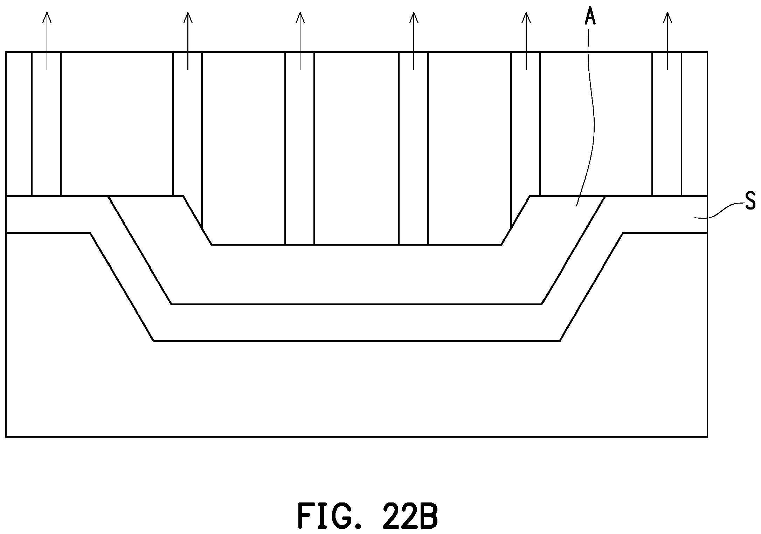

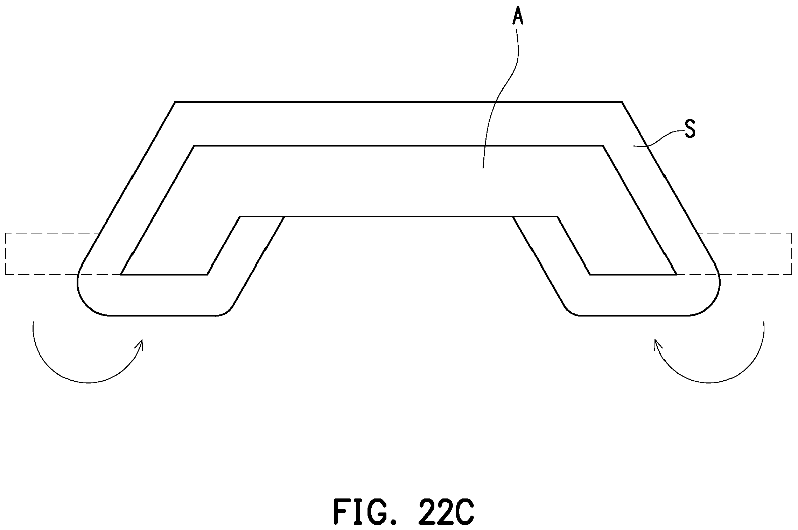

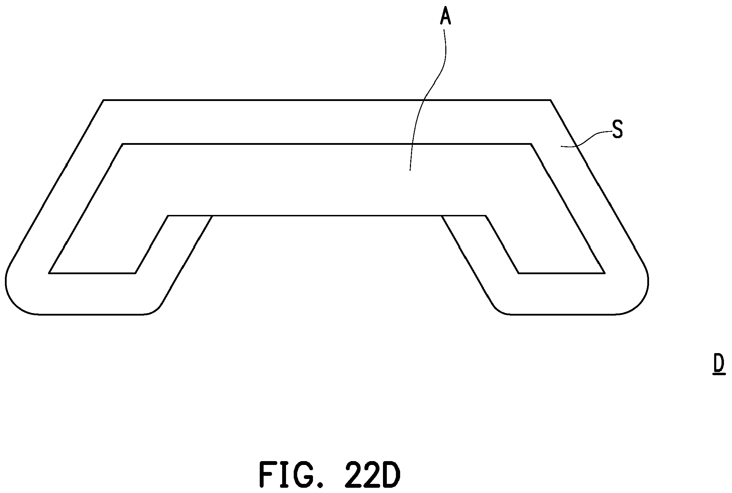

In some embodiments, the manufacturing process of an automotive ornament D may include the following steps. Referring to FIG. 22A, first, the surface decoration layer S with an adhesive layer (not shown) on the back after cutting may be heated to make the adhesive layer sticky. Referring to FIG. 22B, OMD molding (TOM process) of in-mold injection (vacuum suction positioning) is used, where the OMD molding method may be injection molding through a material A (such as the component wrapped by the surface decoration layer in the above embodiment), laser engraving after front coating, placing the pressure sensing element, placing a table, mold closing vacuuming and heating to soften, pressing molding to finally form a product, laser cutting of the remaining material, transfer printing/laser engraving of pressure sensing marks, etc. Referring to FIG. 22C, a leather wrapping machine is used to implement a wrapping operation of the surface decoration layer S. Referring to FIG. 22D, finally, the automotive ornament D wrapped with the surface decoration layer S is formed.

Moreover, in the above manufacturing method, the surface decoration layer S in FIG. 22A may also have no adhesive layer on the back side, and the same process is used to form the automotive ornament.

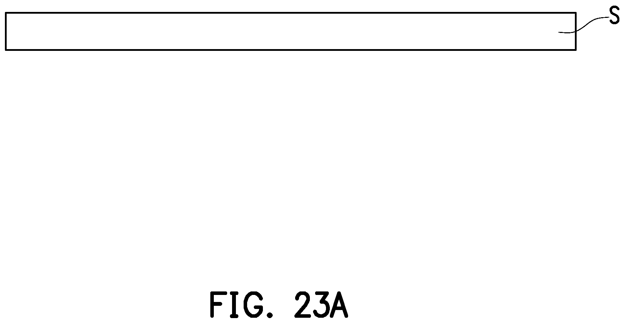

FIG. 23A to FIG. 23D are schematic partial cross-sectional views of a part of a manufacturing method of an automotive ornament according to some other embodiments of the invention.

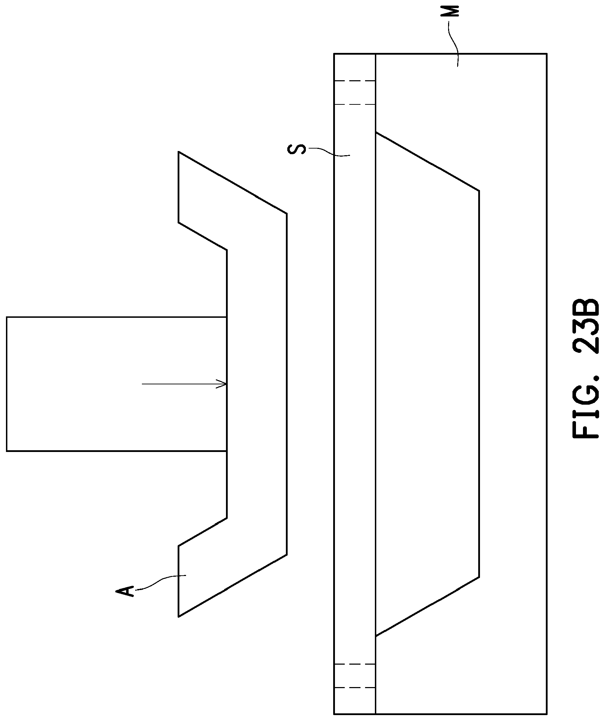

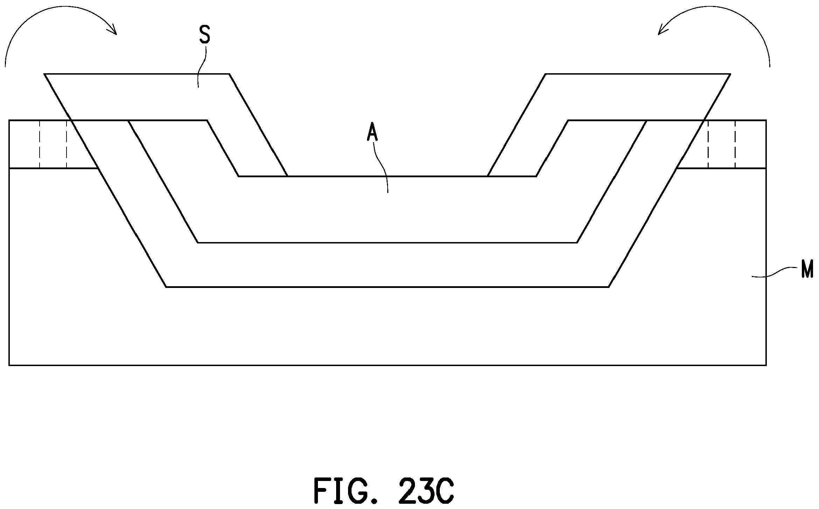

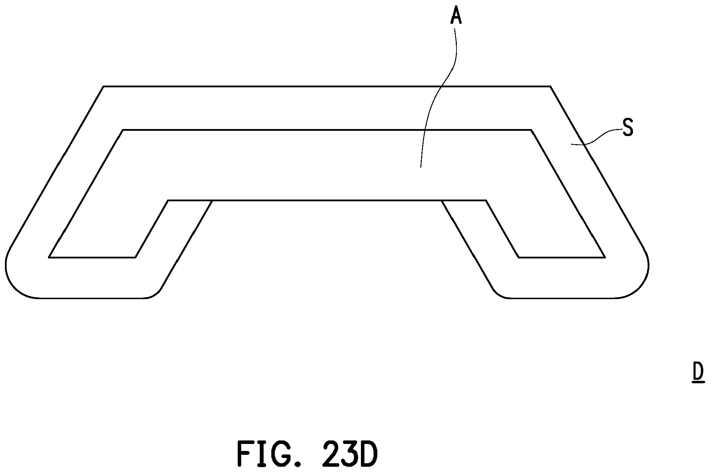

In some other embodiments, the manufacturing process of the automotive ornament D may include the following steps. Referring to FIG. 23A, first, the surface decoration layer S with an adhesive layer (not shown) on the back after cutting may be heated to make the adhesive layer sticky, and laser engraving and placing the pressure sensing element are performed after front coating of the material A (such as the component wrapped by the surface decoration layer in the above embodiment). Referring to FIG. 23B, the surface decoration layer S is positioned on an imitation fixture M. Referring to FIG. 23C, manual wrapping is performed to implement the wrapping operation of the surface decoration layer S. Referring to FIG. 23D, finally, the automotive ornament D wrapped with the surface decoration layer S is formed.

In addition, in the above-mentioned manufacturing method, the surface decoration layer S in FIG. 23A may also have no adhesive layer on the back surface, and after the laser engraving on the front surface, a transparent paint may be sprayed, and then the same process is adopted to form the automotive ornament.

It should be noted that the invention is not limited to the aspects of the aforementioned embodiments, and the aspects of the aforementioned embodiments may be arbitrarily matched, and similar films may adopt similar materials. In addition, the aforementioned manufacturing method and TOM process are all exemplary descriptions, and the invention is not limited thereto. The above steps and processes may be selected, arranged and matched according to actual design requirements, and other suitable steps and processes may be added according to actual design requirements, as long as the surface decoration layer wraps the substrate, the surface decoration layer covers the pressure sensing element, the pressure sensing element is electrically connected to the light-emitting element through the circuit board, and pressure sensing of the pressure sensing element causes the light-emitting element to emit light, it is consider to be within the protection scope of the invention.

In summary, due to the light-transmitting property of the surface decoration layer, the substrate of the automotive ornament of the invention may have an improved visual effect through wrapping of the surface decoration layer. In addition, as the surface decoration layer covers the pressure sensing element, the pressure sensing element is electrically connected to the light-emitting element through the circuit board, and the pressure sensing of the pressure sensing element causes the light-emitting element to emit light, the automotive ornament of the invention has both practicality and improved visual effect.

It will be apparent to those skilled in the art that various modifications and variations can be made to the disclosed embodiments without departing from the scope or spirit of the invention. In view of the foregoing, it is intended that the invention covers modifications and variations provided they fall within the scope of the following claims and their equivalents.

## Claims

1. An automotive ornament (1, 2, 3, 4, 5, 6, 7, 8, 9, 91, 92, 10, 100, 200, 300, 400, 500, 600, 700, 800, 900, D), comprising:
a circuit board (170);
a substrate (2b, 4b, 6b, 8b, 91b, 11, 110), disposed on the circuit board (170);
a light-emitting element (14, 140), disposed between the circuit board (170) and the substrate (2b, 4b, 6b, 8b, 91b, 11, 110), and the light-emitting element (14, 140) being electrically connected to the circuit board (170);
a surface decoration layer (3b, 9a, 92a, 13, 130, 230, 430, 630, S), wrapping the substrate (2b, 4b, 6b, 8b, 91b, 11, 110); and
a pressure sensing element (12, 120), wherein the surface decoration layer (3b, 9a, 92a, 13, 130, 230, 430, 630, S) covers the pressure sensing element (12, 120), the pressure sensing element (12, 120) is electrically connected to the light-emitting element (14, 140) through the circuit board (170), and pressure sensing of the pressure sensing element (12, 120) causes the light-emitting element (14, 140) to emit light, vibrate, or feedback sound.

2. The automotive ornament (1, 2, 3, 4, 5, 6, 7, 8, 9, 91, 92, 10, 100, 200, 300, 400, 500, 600, 700, 800, 900, D) as claimed in claim 1, further comprising an adhesive layer (1a, 7b, 150) disposed between the surface decoration layer (3b, 9a, 92a, 13, 130, 230, 430, 630, S) and the substrate (2b, 4b, 6b, 8b, 91b, 11, 110).

3. The automotive ornament (1, 2, 3, 4, 5, 6, 7, 8, 9, 91, 92, 10, 100, 200, 300, 400, 500, 600, 700, 800, 900, D) as claimed in claim 1, wherein the light-emitting element (14, 140) is a micro light-emitting element (14, 140) in the circuit board (170).

4. The automotive ornament (1, 2, 3, 4, 5, 6, 7, 8, 9, 91, 92, 10, 100, 200, 300, 400, 500, 600, 700, 800, 900, D) as claimed in claim 1, wherein the pressure sensing element (12, 120) penetrates through the substrate (2b, 4b, 6b, 8b, 91b, 11, 110).

5. The automotive ornament (1, 2, 3, 4, 5, 6, 7, 8, 9, 91, 92, 10, 100, 200, 300, 400, 500, 600, 700, 800, 900, D) as claimed in claim 1, further comprising a texture layer (2a, 6a, 7a, 8a, 91a, 280, 880), wherein the texture layer (2a, 6a, 7a, 8a, 91a, 280, 880) comprises a texture pattern (3a, 282), the surface decoration layer (3b, 9a, 92a, 13, 130, 230, 430, 630, S) covers the texture pattern (3a, 282), and the texture layer (2a, 6a, 7a, 8a, 91a, 280, 880) has a stretching degree less than that of the surface decoration layer (3b, 9a, 92a, 13, 130, 230, 430, 630, S).

6. The automotive ornament (1, 2, 3, 4, 5, 6, 7, 8, 9, 91, 92, 10, 100, 200, 300, 400, 500, 600, 700, 800, 900, D) as claimed in claim 5, wherein:
the texture layer (2a, 6a, 7a, 8a, 91a, 280, 880) is disposed between the substrate (2b, 4b, 6b, 8b, 91b, 11, 110) and the surface decoration layer (3b, 9a, 92a, 13, 130, 230, 430, 630, S); or
the texture layer (2a, 6a, 7a, 8a, 91a, 280, 880) is disposed between the substrate (2b, 4b, 6b, 8b, 91b, 11, 110) and the circuit board (170).

7. The automotive ornament (1, 2, 3, 4, 5, 6, 7, 8, 9, 91, 92, 10, 100, 200, 300, 400, 500, 600, 700, 800, 900, D) as claimed in claim 1, wherein the surface decoration layer (3b, 9a, 92a, 13, 130, 230, 430, 630, S) comprises light-transmitting leather, semi-light-transmitting leather, opaque leather, gel film, imitation wood veneer, real wood veneer, leather with color gradation, or gel film with color gradation.

8. The automotive ornament (1, 2, 3, 4, 5, 6, 7, 8, 9, 91, 92, 10, 100, 200, 300, 400, 500, 600, 700, 800, 900, D) as claimed in claim 1, further comprising a light-blocking bracket (390) surrounding a light-emitting area (R) of the light-emitting element (14, 140).

9. The automotive ornament (1, 2, 3, 4, 5, 6, 7, 8, 9, 91, 92, 10, 100, 200, 300, 400, 500, 600, 700, 800, 900, D) as claimed in claim 1, further comprising a light-transmitting mark (16), wherein a ray emitted by the light-emitting element (14, 140) exits the surface decoration layer (3b, 9a, 92a, 13, 130, 230, 430, 630, S) through the light-transmitting mark (16) to display the light-transmitting mark (16).

10. A manufacturing method of an automotive ornament (1, 2, 3, 4, 5, 6, 7, 8, 9, 91, 92, 10, 100, 200, 300, 400, 500, 600, 700, 800, 900, D), comprising:
providing a substrate (2b, 4b, 6b, 8b, 91b, 11, 110), wherein the substrate (2b, 4b, 6b, 8b, 91b, 11, 110) has a first surface (11a, 110a) and a second surface (11b, 110b) opposite to the first surface (11a, 110a);
disposing a pressure sensing element (12, 120) in the substrate (2b, 4b, 6b, 8b, 91b, 11, 110);
stretching a surface decoration layer (3b, 9a, 92a, 13, 130, 230, 430, 630, S), so that the surface decoration layer (3b, 9a, 92a, 13, 130, 230, 430, 630, S) at least wraps the substrate (2b, 4b, 6b, 8b, 91b, 11, 110); and
disposing a circuit board (170) on the second surface (11b, 110b), wherein the circuit board (170) has a light-emitting element (14, 140), the pressure sensing element (12, 120) is electrically connected to the light-emitting element (14, 140) through the circuit board (170), and the light-emitting element (14, 140) is made to emit light, vibrate, or feedback sound through pressure sensing of the pressure sensing element (12, 120).
